# EUROPÄISCHE PATENTANMELDUNG

(11) **EP 2 975 282 A2**
(43) Veröffentlichungstag der Anmeldung: **20.01.2016**
(21) Anmeldenummer: 15173563.6
(22) Anmeldetag: 24.06.2015
(51) Int. Cl.: F16D 21/06

(54) **DOPPELKUPPLUNGSEINRICHTUNG**

(30) Priorität: 14.07.2014 DE 102014213619
(71) Anmelder: Schaeffler Technologies AG & Co. KG, 91074 Herzogenaurach (DE)
(72) Erfinder: Almert, Andreas, 77767 Urloffen (DE)

(57) **Zusammenfassung**

Doppelkupplungseinrichtung (10), vorzugsweise in nasslaufender Betriebsweise, umfassend eine erste Kupplungsbaugruppe (20) mit einem ersten Kupplungseingang (22) und einem mit diesem mittels einer ersten Betätigungskraft über ein erstes, erste Reiblamellen (27) umfassendes Reibpaket in durch einen ersten mittleren Reibradius gekennzeichneten Reibeingriff bringbaren und mit einer ersten Getriebeeingangswelle verbindbaren ersten Kupplungsausgang und eine zweite Kupplungsbaugruppe (32) mit einem zweiten Kupplungseingang (34) und einem mit diesem mittels einer zweiten Betätigungskraft über ein zweites, zweite Reiblamellen (39) umfassendes Reibpaket in durch einen zweiten mittleren Reibradius gekennzeichneten Reibeingriff bringbaren und mit einer zweiten Getriebeeingangswelle verbindbaren zweiten Kupplungsausgang (40), wobei die zweite Betätigungskraft zur Übertragung eines Drehmoments über die zweite Kupplungsbaugruppe (FK2) um einen Faktor X größer ist als die erste Betätigungskraft (FK1) zur Übertragung des gleichen Drehmoments über die erste Kupplungsbaugruppe.

## Beschreibung

Die Erfindung betrifft eine Doppelkupplungseinrichtung nach dem Oberbegriff von Anspruch 1.

Die Aufgabe liegt darin, die Drehmomentübertragungsleistung einer Doppelkupplungseinrichtung zu verbessern. Weiterhin kann die Aufgabe auch darin bestehen, die Herstellungskosten und/oder den Platzbedarf, insbesondere den axialen Bauraum zu verringern. Auch soll ein sicherer Betrieb einer Doppelkupplungseinrichtung erreicht werden.

Dementsprechend wird eine Doppelkupplungseinrichtung vorgeschlagen, vorzugsweise in nasslaufender Betriebsweise, umfassend eine erste Kupplungsbaugruppe mit einem ersten Kupplungseingang und einem mit diesem mittels einer ersten Betätigungskraft über ein erstes, erste Reiblamellen umfassendes Reibpaket in durch einen ersten mittleren Reibradius gekennzeichneten Reibeingriff bringbaren und mit einer ersten Getriebeeingangswelle verbindbaren ersten Kupplungsausgang und eine zweite Kupplungsbaugruppe mit einem zweiten Kupplungseingang und einem mit diesem mittels einer zweiten Betätigungskraft über ein zweites, zweite Reiblamellen umfassendes Reibpaket in durch einen zweiten mittleren Reibradius gekennzeichneten Reibeingriff bringbaren und mit einer zweiten Getriebeeingangswelle verbindbaren zweiten Kupplungsausgang, wobei die zweite Betätigungskraft zur Übertragung eines Drehmoments über die zweite Kupplungsbaugruppe um einen Faktor X größer ist als die erste Betätigungskraft zur Übertragung des gleichen Drehmoments über die erste Kupplungsbaugruppe.

In einer besonders bevorzugten Ausführungsform der Erfindung ist der erste mittlere Reibradius um den gleichen Faktor X größer ist als der zweite mittlere Reibradius.

In einer weiteren besonders bevorzugten Ausführungsform der Erfindung nimmt der Faktor X den Wert 1,3 bis 1,4 ein.

In einer weiteren besonders bevorzugten Ausführungsform der Erfindung umfassen die ersten Reiblamellen eine Gesamtzahl erster Lamellenelemente, die sich zusammensetzt aus einer Anzahl erster wenigstens einen Reibbelag aufweisender Belaglamellen und einer Anzahl erster mit dem Reibbelag in Reibwirkung bringbarer Gegenlamellen und die zweiten Reiblamellen eine Gesamtzahl zweiter Lamellenelemente, die sich zusammensetzt aus einer Anzahl zweiter wenigstens einen Reibbelag aufweisender Belaglamellen und einer Anzahl zweiter mit dem Reibbelag in Reibwirkung bringbarer Gegenlamellen. Insbesondere ist dabei die Anzahl erster Lamellen gleich der Anzahl zweiter Lamellen.

In einer weiteren besonders bevorzugten Ausführungsform der Erfindung sind das erste und zweite Reibpaket radial zueinander versetzt angeordnet. Vorzugsweise ist das erste Reibpaket radial weiter außen als das zweite Reibpaket angeordnet.

In einer weiteren besonders bevorzugten Ausführungsform der Erfindung liegt das Verhältnis aus der Länge des ersten oder zweiten Reibpakets zum mittleren Reibradius des ersten oder zweiten Reibpakets in einem Bereich zwischen 0,1 und 0,4.

In einer weiteren besonders bevorzugten Ausführungsform der Erfindung ist ein zweites Lamellenelement radial länger als eine zweites Lamellenelement.

In einer weiteren besonders bevorzugten Ausführungsform der Erfindung weisen der erste und zweite Kupplungseingang einen gemeinsamen Trägerabschnitt auf.

In einer weiteren besonders bevorzugten Ausführungsform der Erfindung weisen das erste und zweite Reibpaket mindestens jeweils drei Lamellenelemente auf.

Weitere Vorteile und vorteilhafte Ausgestaltungen der Erfindung ergeben sich aus der Beschreibung und den Abbildungen, bei deren Darstellung zugunsten der Übersichtlichkeit auf eine maßstabsgetreue Wiedergabe verzichtet wurde. Alle erläuterten Merkmale sind nicht nur in der angegebenen Kombination, sondern auch in anderen Kombinationen beziehungsweise in Alleinstellung anwendbar, ohne den Rahmen der Erfindung zu verlassen.

### Figurenbeschreibung

Die Erfindung wird im Folgenden unter Bezugnahme auf die Abbildungen ausführlich beschrieben. Es zeigen im Einzelnen:

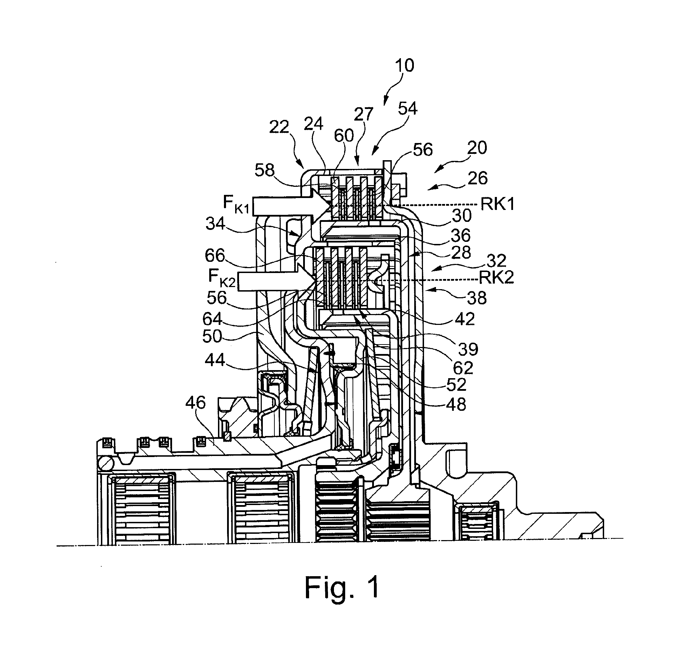

- Figur 1:: Einen Halbschnitt eines Querschnitts einer Doppelkupplungseinrichtung in einer speziellen Ausführungsform der Erfindung.

Figur 1 zeigt einen Halbschnitt eines Querschnitts einer Doppelkupplungseinrichtung 10 in einer speziellen Ausführungsform der Erfindung. Die Doppelkupplungseinrichtung 10 ist nasslaufend ausgeführt, wozu diese von einem Kupplungsgehäuse umschlossen ist, so dass ein Fluid im Inneren des Kupplungsgehäuses aufgenommen werden kann.

Die Doppelkupplungseinrichtung 10 umfasst eine erste Kupplungsbaugruppe 20. Diese umfasst einen ersten Kupplungseingang 22, speziell in Form eines ersten Außenlamellenträgers 24, der über ein erstes Reibpaket 26, das erste Reiblamellen 27 umfasst, in Reibeingriff mit einem ersten Kupplungsausgang 28 gebracht werden kann. Der erste Kupplungsausgang 26 ist speziell als erster Innenlamellenträger 30ausgebildet und mit einer ersten Getriebeeingangswelle verbindbar.

Weiterhin umfasst die Doppelkupplungseinrichtung 10 eine zweite Kupplungsbaugruppe 32. Diese umfasst einen zweiten Kupplungseingang 34, speziell in Form eines zweiten Außenlamellenträgers 36, der über ein zweites Reibpaket 38, das zweite Reiblamellen 39 umfasst, in Reibeingriff mit einem zweiten Kupplungsausgang 40 gebracht werden kann. Der zweite Kupplungsausgang 40 ist speziell als zweiter Innenlamellenträger 42 ausgebildet und mit einer zweiten Getriebeeingangswelle verbindbar.

Der zweite Außenlamellenträger 36 ist mit dem ersten Außenlamellenträger 24 drehfest verbunden, hier insbesondere aus einem Bauteil aufgebaut. Beide weisen einen gemeinsamen Trägerabschnitt 44 auf, der insbesondere radial innen mit einem Rotor 46 fest verbunden ist und der zugleich ein Dichtmittel 48 für die Betätigungseinrichtung, insbesondere der zweiten Kupplungsbaugruppe 32, aufweist.

Die erste Kupplungsbaugruppe 20 ist radial benachbart zu der zweiten Kupplungsbaugruppe 32, hier speziell radial außerhalb der zweiten Kupplungsbaugruppe 32, angeordnet. Vorzugsweise ist das erste Reibpaket 26 und das zweite Reibpaket 38 axial überlappend und radial übereinander angeordnet. Das erste Reibpaket 26 ist radial weiter außen angeordnet.

Die erste Kupplungsbaugruppe 20 wird über ein erstes, insbesondere axial verschiebbares Betätigungselement 50 betätigt, das durch den ersten Kupplungseingang 22 axial durchgreift. Die zweite Kupplungsbaugruppe 32 wird über ein zweites, insbesondere axial verschiebbares Betätigungselement 52 betätigt

Der erste Kupplungseingang 22 ist mit dem ersten Kupplungsausgang 28 mittels einer ersten Betätigungskraft FK1 über das erste Reibpaket 26 in durch einen ersten mittleren Reibradius RK1 gekennzeichneten Reibeingriff. Ebenso kann der zweite Kupplungseingang 34 ist mit dem zweiten Kupplungsausgang 40 mittels einer zweiten Betätigungskraft FK2 über das zweite Reibpaket 38 in durch einen zweiten mittleren Reibradius RK2 gekennzeichneten Reibeingriff gebracht werden.

Dabei ist die zweite Betätigungskraft FK2 zur Übertragung eines Drehmoments über die zweite Kupplungsbaugruppe 32 um einen Faktor X größer ist als die erste Betätigungskraft FK1 zur Übertragung des gleichen Drehmoments über die erste Kupplungsbaugruppe 20.
Der erste mittlere Reibradius RK1 ist insbesondere um den gleichen Faktor X größer als der zweite mittlere Reibradius RK2.

Der Faktor X nimmt vorzugsweise den Wert 1,3 bis 1,4 ein.

Die ersten Reiblamellen 27 weisen eine Gesamtzahl erster Lamellenelemente 54 auf, die sich zusammensetzt aus einer Anzahl erster wenigstens einen Reibbelag 56 aufweisender Belaglamellen 58 und einer Anzahl erster mit dem Reibbelag 56 in Reibwirkung bringbarer Gegenlamellen 60. Die zweiten Reiblamellen 39weisen eine Gesamtzahl zweiter Lamellenelemente 62 auf, die sich zusammensetzt aus einer Anzahl zweiter wenigstens einen Reibbelag 56 aufweisender Belaglamellen 64 und einer Anzahl zweiter mit dem Reibbelag 56 in Reibwirkung bringbarer Gegenlamellen 66 umfassen, wobei hier speziell die Anzahl erster Lamellenelemente 54 gleich der Anzahl zweiter Lamellenelemente 62 ist.

## Patentansprüche

1. Doppelkupplungseinrichtung (10),vorzugsweise in nasslaufender Betriebsweise, umfassend
eine erste Kupplungsbaugruppe mit einem ersten Kupplungseingang und einem mit diesem mittels einer ersten Betätigungskraft über ein erstes, erste Reiblamellen umfassendes Reibpaket in durch einen ersten mittleren Reibradius gekennzeichneten Reibeingriff bringbaren und mit einer ersten Getriebeeingangswelle verbindbaren ersten Kupplungsausgang;
eine zweite Kupplungsbaugruppe mit einem zweiten Kupplungseingang und einem mit diesem mittels einer zweiten Betätigungskraft über ein zweites, zweite Reiblamellen umfassendes Reibpaket in durch einen zweiten mittleren Reibradius gekennzeichneten Reibeingriff bringbaren und mit einer zweiten Getriebeeingangswelle verbindbaren zweiten Kupplungsausgang,
**dadurch gekennzeichnet, dass** die zweite Betätigungskraft zur Übertragung eines Drehmoments über die zweite Kupplungsbaugruppe um einen Faktor X größer ist als die erste Betätigungskraft zur Übertragung des gleichen Drehmoments über die erste Kupplungsbaugruppe.

2. Doppelkupplungseinrichtung (10) nach Anspruch 1, wobei der erste mittlere Reibradius um den gleichen Faktor X größer ist als der zweite mittlere Reibradius.

3. Doppelkupplungseinrichtung (10) nach einem der vorangehenden Ansprüche, wobei der Faktor X den Wert 1,3 bis 1,4 einnimmt.

4. Doppelkupplungseinrichtung (10) nach einem der vorangehenden Ansprüche, wobei die ersten Reiblamellen eine Gesamtzahl erster Lamellenelemente, die sich zusammensetzt aus einer Anzahl erster wenigstens einen Reibbelag aufweisender Belaglamellen und einer Anzahl erster mit dem Reibbelag in Reibwirkung bringbarer Gegenlamellen und die zweiten Reiblamellen eine Gesamtzahl zweiter Lamellenelemente, die sich zusammensetzt aus einer Anzahl zweiter wenigstens einen Reibbelag aufweisender Belaglamellen und einer Anzahl zweiter mit dem Reibbelag in Reibwirkung bringbarer Gegenlamellen umfassen, wobei die Anzahl erster Lamellenelemente gleich der Anzahl zweiter Lamellenelemente ist.

5. Doppelkupplungseinrichtung (10) nach einem der vorangehenden Ansprüche, wobei das erste und zweite Reibpaket radial zueinander versetzt angeordnet sind.

6. Doppelkupplungseinrichtung (10) nach Anspruch 5, wobei das erste Reibpaket radial weiter außen als das zweite Reibpaket angeordnet ist.

7. Doppelkupplungseinrichtung (10) nach einem der vorangehenden Ansprüche, wobei das Verhältnis aus der Länge des ersten und/oder zweiten Reibpakets zum mittleren Reibradius des ersten oder zweiten Reibpakets in einem Bereich zwischen 0,1 und 0,4 liegt.

8. Doppelkupplungseinrichtung (10) nach einem der vorangehenden Ansprüche, wobei ein zweites Lamellenelement radial länger ist als ein erstes Lamellenelement.

9. Doppelkupplungseinrichtung (10) nach einem der vorangehenden Ansprüche, wobei der erste und zweite Kupplungseingang einen gemeinsamen Trägerabschnitt aufweisen.

10. Doppelkupplungseinrichtung (10) nach einem der vorangehenden Ansprüche, wobei das erste und zweite Reibpaket mindestens jeweils drei Lamellenelemente aufweisen.
